(19)

Europäisches
Patentamt
European
Patent Office
Office européen
des brevets

(11) **EP 2 587 808 A1**

(12) **EUROPEAN PATENT APPLICATION**
published in accordance with Art. 153(4) EPC

(43) Date of publication:
 **01.05.2013 Bulletin 2013/18**

(21) Application number: **10854139.2**

(22) Date of filing: **01.07.2010**

(51) Int Cl.:
 **H04N 13/00** (2006.01)     **G06T 15/00** (2011.01)

(86) International application number:
 **PCT/KR2010/004265**

(87) International publication number:
 **WO 2012/002593 (05.01.2012 Gazette 2012/01)**

(84) Designated Contracting States:
 **AL AT BE BG CH CY CZ DE DK EE ES FI FR GB
 GR HR HU IE IS IT LI LT LU LV MC MK MT NL NO
 PL PT RO SE SI SK SM TR**

(30) Priority: **28.06.2010  KR 20100061408**

(71) Applicant: **PNF Co. Ltd
 Gyeonggi-do 462-120 (KR)**

(72) Inventor: **LEE, Jae Jun
 Seoul 151-891 (KR)**

(74) Representative: **ABG Patentes, S.L.
 Avenida de Burgos, 16D
 Edificio Euromor
 28036 Madrid (ES)**

(54) **SYSTEM AND METHOD FOR DISPLAYING 3D IMAGES**

(57)     Provided are a stereoscopic image display unit having a 3D information input device and a 3D stereoscopic image display method using the 3D information input device. The 3D information input device receives a synchronization signal used for a conventional stereoscopic image display unit and generates an ultrasonic signal. The stereoscopic image display unit receives the ultrasonic signal through the ultrasonic wave reception units insalled at a plurality of areas and meaures a distance between the 3D information input device and each of the ultrasonic wave reception units by using a time difference between a generation time of the synchronization signal and a reception time of the ultrasonic signal and measures a position of the 3D information input device in a 3D real space by using the distances. The measured position of the 3D information input device in the 3D real space is converted into a coordinate in the 3D stereoscopic image space. A position of the 3D information input device functioning as a mouse or a remote controller is stereoscopically displayed on the 3D stereoscopic image, so that click information or menu selection information can be input. A synchronization signal logic used for a convetional stereoscopic image display unit is employed, so that it is possible to embody a 3D remote controller or a 3D mouse without an increase in cost caused by addition of the configuration.

【Figure 1】

Printed by Jouve, 75001 PARIS (FR)

## Description

[Technical Field]

The present invention relates to a stereoscopic image display system, and more particularly, to a 3D stereoscopic image display system including a 3D information input device.

[Background Art]

Recently, much attention has been paid to 3D stereoscopic images. Accordingly, 3D TVs and 3D monitors for implementing 3D stereoscopic images have been actively developed.

The 3D stereoscopic image technique has been applied to various fields of information communication, broadcasting, medical treatment, education and training, military, game, animation, virtual realtiy, CAD, and the like. The 3D stereoscopic image technique is a core basis of the next generation 3D stereoscopic multimedia information communication required in various fields.

Stereoscopic effect perceived by a person is formed according to a complex combination of a degree of change in a thickness of eye lenses according to a position of an observed object, a difference of angles between two eyes with respect to the object, differences of position and shape of the object between the left and right eyes, a parallax cuaed by movment of the object, or other various psychological and memory effects.

Among them, the most important factor for forming the stereoscopic effect is a binocular disparity due to a separateion by about 6 to 7 cm between the left and right eyes. Due to the binocular disparity, an object is viewed at predetermined angles. The difference between the angles causes diffenrt images incident to the left and right eyes. The two images are transmitted through the retina to the brain. In the brain, the two images are combined into an orginal 3D stereoscopic image.

As an example of a conventional technique of implemeitng a 3D stereoscopic image, 2D images are separated and selected through color filers of particular glasses which have a relationship of complementary colors. For example, in the case where a left red image and a right blue image which are displayed on a white sheet are viewed through red/blue color filters, the red image can be viewed through only the red glass, and the blue image can be viewed through only the blue glass. Therefore, if the left red image and the right blue image are viewed by using the corresponding color filer glasses, a stereoscopic image can be viewed. However, recently, this method is not widely used since a true colored object cannot be displayed.

In addition, as other examples of a conventional example of forming a 3D stereoscopic image, there are a pssive type method using polarizing filters and an active type method using shutter glasses.

In the polarizing filter method, left and right images are separaed according to the polarization rotation direction. If the left and right images are emitted from a display unit where a polarizing film is attached on the front surface therof, the left and right images are separated by the polarizing glasses to be viewed by the left and right eyes. According to the polarizing filter method, a high resolution color moving picture can be dislayed, and the stereoscopic image can be viewed by a number of viewers. In addition, since characteristics of the polarizing glasses are used, the stereoscopic effect can be easily obtained. However, if polarizaing capability of the glasses is low, the stereoscopic effect deterioreates. In addition, since an additional polarizing film needs to be attached on the TV scrren, the production cost of the TV set is increased. In addition, since the images pass through the polarizing plate, sharpness or brightness of the image deteriorates.

As an active type, the shutter glasses method can overcome the shortcomings of the polarizing filter method. In the shutter glasses method, a display unit alternately outputs left and right images while generating a synchronization signal constructed with an IR signal or an RF signal, and shutter glasses attached with electrontic shutters which a user wears alternately blocks one of the left and right eyes in response to the synchronization signal. Therefore the left and right images can be independently viewed, so that the stereoscopic effect can be obtained. Unlike the polarizing filter method, in this method, additional parts may not almost be provided to the display unit in order to implement the stereoscopic image. Therefore, the 3D display unit can be produced at almose the same production cost of the 2D display unit. In addition, a full resolution image can be viewed by the left and right eyes, so that high resolution 3D image can be implemented. At present, due to these advantages, the shutter glasses method is employed by many manufacturers which have been developing 3D TVs and monitors.

However, in the case of the 3D stereoscopic image display units described above, a selector device such as a remote controller or a mouse for selecting or operating 3D menu on a 3D stereoscopic image has not yet been provided. In other words, in the case of the 3D TV, like a conventional method, menu items allocated with numerals are displayed on the screen, information input is performed by selecting a numeral by using a remote controller having a large number of buttons. However, such a method cannot be distinguished from that of a 2D TV.

In addition, in the case of the 3D monitor, the screen is stereoscopically displayed, but the mouse is moved on the 2D plane. Therefore, there is a problem in that the menu item or windows that are stereoscopically dislayed cannot be selected.

[Disclosure]

[Technical Problem]

The present invention is to provide a stereoscopic image display unit having 3D information input device capable of inputting information by moving a pointer such as a cursor in a 3D space on a display unit which displays a 3D stereoscopic image.

[Technical Solution]

According to an apect of the present invention, there is provided a 3D stereoscopic image display system including: a 3D information input device which receives a synchronization signal from a stereoscopic image display unit and generates an ultrasonic signal; and the stereoscopic image display unit which generates the synchronization signal, measures a position of the 3D information input device by using a time difference between a generation time of the synchronization signal and a reception time of the ultrasonic signal, and outputs a 3D stereoscopic image where the position of the 3D information input device is displayed.

In the above aspect, the stereoscopic image display unit may perform mapping of a 3D real space into a 3D stereoscopic image space, convert a coordinate of the 3D information input device in the 3D real space into a coordinate in the 3D stereoscopic image space output by the stereoscopic image display unit, and display the position of the 3D information input device.

In addition, the stereoscopic image display unit may display the 3D stereoscopic image so that a menu item is displayed in the 3D stereoscopic space, and if a button signal is received from the 3D information input device, the stereoscopic image display unit may select the menu item located in the 3D stereoscopic space corresponding to the 3D information input device.

In addition, the stereoscopic image display unit may be input with a movement range of the 3D information input device at a position of a user and perform mapping of the 3D real space into the 3D stereoscopic image space by mapping the movement range of the 3D information input device into a display range of the 3D stereoscopic image space output by the stereoscopic image display unit, so that initialization is performed.

In addition, after the initialization is finished, the stereoscopic image display unit may convert the coordinate of the 3D information input device in the 3D real space into the coordinate of the 3D information input device in the 3D stereoscopic image space according to a result of the mapping performed in the initialization process.

In addition, the stereoscopic image display unit may include: an image signal processing unit which decodes an image signal input from an external portion or an image signal stored in a storage medium to generate a stereoscopic image signal which can be output as a 3D stereoscopic image and allows a coordinate of the 3D information input device in the 3D stereoscopic image space which is input from a coordinate system conversion unit to be included in the stereoscopic image signal to output the stereoscopic image signal; a 3D stereoscopic image output unit which outputs the stereoscopic image signal input from the image signal processing unit as a 3D image; an information input module which generates the ultrasonic synchronization signal, measures the position of the 3D information input device in the 3D real space by using a time difference between the generation time of the ultrasonic synchronization signal and the reception time of the ultrasonic signal, and outputs a coordinate of 3D information input device; and the coordinate system conversion unit which converts the coordinate of the 3D information input device in the 3D real space into the coordinate in the 3D stereoscopic image space output by the screen output unit and outputs the converted coordinate to the image signal processing unit.

In addition, the information input module may be installed as an external type module to the stereoscopic image display unit

In addition, the information input module may include: a synchronization signal generation unit which generates the synchronization signal; a plurality of ultrasonic wave reception units which are separated from each other; and a position measurement unit which generates a coordinate by measuring the position of the 3D information input device in the real space by using a time difference between the generation time of the synchronization signal and the reception time of the ultrasonic signal receivied by each of the ultrasonic wave reception units and outputs the generated coordinate to the coordinate system conversion unit.

In addition, the information input module further includes a button information extraction unit which checks the ultrasonic signals received by a plurality of the ultrasonic wave reception units to extract button information generated by the 3D information input device.

In addition, the information input module may further include: a button signal reception unit which receives a button signal including button information generated by the 3D information input device; and a button information extraction unit which extracts the button information from the button signal.

In addition, the 3D stereoscopic image display system may further include shutter glasses which alternately blocks left and right eyes of a user according to the synchronization signal.

In addition, the 3D information input device may generate the ultrasonic signal every a predetermined number of synchronization signals, which is defined in advance, among the synchronization signals.

In addition, the stereoscopic image display unit may include: an image signal processing unit which decodes an image signal input from an external portion or an image signal stored in a storage medium to generate a stereoscopic image signal which can be output as a 3D stereoscopic image and allows a coordinate of the 3D information input device in the 3D stereoscopic image space which is input from a coordinate system conversion unit to be included in the stereoscopic image signal to output the stereoscopic image signal; a stereoscopic image generation unit which converts the stereoscopic image signal input from the image signal processing unit into a left-eye image signal and a right eye image signal; a timing control unit which outputs the left-eye image signal and the right eye image signal; a screen output unit which displays the left-eye image signal and the right eye image signal input from the timing control unit to a user; a shutter control unit which senses that the timing control unit outputs the left-eye image signal and the right eye image signal in cooperation with the timing control unit and at the same time, generates the synchronization signal; an information input module which measures the position of the 3D information input device in the 3D real space by using a time difference between the generation time of the synchronization signal generated by the shutter control unit and the reception time of the ultrasonic signal and outputs a coordinate of 3D information input device; and a coordinate system conversion unit which converts the coordinate of the 3D information input device in the 3D real space into a coordinate in the 3D stereoscopic image space output by the screen output unit and outputs the coordinate to the image signal processing unit.

In addition, the information input module may be installed as an external type module to the stereoscopic image display unit.

In addition, the information input module may include: a plurality of ultrasonic wave reception units which are disposed to be separated from each other; and a position measurement unit which generates the coordinate by measuring the position of the 3D information input device in the real space by using a time difference between a generation time of the synchronization signal and a reception time of the ultrasonic signal receivied by each of the ultrasonic wave reception units and outputs the generated coordinate to the coordinate system conversion unit.

In addition, the information input module may further include a button information extraction unit which extracts the button information generated by the 3D information input device by examining the ultrasonic signals received by a plurality of the ultrasonic wave reception units.

In addition, the information input module may further include: a button signal reception unit which receive a button signal including the button information generated by the 3D information input device; and a button information extraction unit which extracts the button information from the button signal.

According to another aspect of the present invention, there is provided a 3D stereoscopic image display system including: a 3D information input device which generates a synchronization signal and an ultrasonic signal; and a stereoscopic image display unit which measures a position of the 3D information input device by using a time difference between a reception time of the synchronization signal and a reception time of the ultrasonic signal and outputs a 3D stereoscopic image where the position of the 3D information input device is displayed.

In the above aspect, the stereoscopic image display unit may perform mapping of the 3D real space into a 3D stereoscopic image space, converts a coordinate of the 3D information input device in the real space into a coordinate in the 3D stereoscopic image space output by the stereoscopic image display unit, and display the position of the 3D information input device.

In addition, the stereoscopic image display unit may display the 3D stereoscopic image so that a menu item is displayed in the 3D stereoscopic space, and if a button signal is received from the 3D information input device, the stereoscopic image display unit may select the menu item located in the 3D stereoscopic space corresponding to the 3D information input device.

In addition, the stereoscopic image display unit may be input with a movement range of the 3D information input device at a position of a user and perform mapping of the 3D real space into the 3D stereoscopic image space by mapping the movement range of the 3D information input device into a display range of the 3D stereoscopic image space output by the stereoscopic image display unit, so that initialization is performed.

In addition, after the initialization is finished, the stereoscopic image display unit may convert the coordinate of the 3D information input device in the 3D real space into the coordinate of the 3D information input device in the 3D stereoscopic image space according to a result of the mapping performed in the initialization process.

In addition, the stereoscopic image display unit may include: an image signal processing unit which decodes an image signal input from an external portion or an image signal stored in a storage medium to generate a stereoscopic image signal which can be output as a 3D stereoscopic image and allows a coordinate of the 3D information input device in the 3D stereoscopic image space which is input from a coordinate system conversion unit to be included in the stereoscopic image signal to output the stereoscopic image signal; a 3D stereoscopic image output unit which outputs the stereoscopic image signal input from the image signal processing unit as a 3D image; an information input module which measures the position of the 3D information input device in the 3D real space by using a time difference between a reception time of the synchronization signal and a reception time of the ultrasonic signal and outputs a coordinate of 3D information input device; and the coordinate system conversion unit which converts the coordinate of the 3D information input device in the 3D real space into the coordinate in the 3D stereoscopic image space output by the screen output unit and outputs the converted coordinate to the image signal processing unit.

In addition, the information input module may be installed as an external type module to the stereoscopic image display unit.

In addition, the information input module may include: a synchronization signal reception unit which receives the synchronization signal; a plurality of ultrasonic wave reception units which are disposed to be separated from each other; and a position measurement unit which generates the coordinate by measuring the position of the 3D information input device in the real space by using a time difference between a reception time of the synchronization signal and a reception time of the ultrasonic signal receivied by each of the ultrasonic wave reception units and outputs the generated coordinate to the coordinate system conversion unit.

In addition, the information input module may further include a button information extraction unit which extracts the button information generated by the 3D information input device by examining the ultrasonic signals received by a plurality of the ultrasonic wave reception units.

In addition, the information input module may further include: a button signal reception unit which receive a button signal including the button information generated by the 3D information input device; and a button information extraction unit which extracts the button information from the button signal.

According to still another appect of the present invention, there is provided a 3D stereoscopic image display method including steps of: (b) in a stereoscopic image display unit, generating a synchronization signal and, in a 3D information input device which receives the synchronization signal, generaeting an ultrasonic signal; (c) in the stereoscopic image display unit, measuring a position of the 3D information input device in a 3D real space by using a time difference between a generation time of the synchronization signal and a reception time of the ultrasonic signal and generating a coordinate value; (d) in the stereoscopic image display unit, converting the coordinate value into a coordinate value in a 3D stereoscopic image space; and (e) displaying a 3D stereoscopic image where the position of the 3D information input device is displayed in the 3D stereoscopic image space to the user.

In the above aspect, an initialization step may be included before the step (b), and the initialization step may include steps of: (a1) in the stereoscopic image display unit, generating the synchronization signal and, in the 3D information input device which receives the synchronization signal, generating the ultrasonic signal while being moved according to user's manipulation; and (a2) in the stereoscopic image display unit, measuring the position of the 3D information input device in the 3D real space by using the time difference between the generation time of the synchronization signal and the reception time of the ultrasonic signal, examining a movement range of the 3D information input device in the 3D real space, and mapping into a display range in the 3D stereoscopic image space.

In addition, in the step (d), the coordinate value of the 3D information input device in the 3D real space may be converted into the coordinate value in the 3D stereoscopic image space according to a result of the mapping of the step (a2).

In addition, the stereoscopic image display unit may further include shutter glasses which alternately blocks left and right eyes of the user according to the synchronization signal, and the 3D information input device generates the ultrasonic signal every a predetermined number of synchronization signals, which is defined in advance, among the synchronization signals.

According to further still another appect of the present invention, there is provided a 3D stereoscopic image display method including steps of: (b) in a 3D information input device, generating a synchronization signal and an ultrasonic signal; (c) in a stereoscopic image display unit, measuring a position of the 3D information input device in a 3D real space by using a time difference between a reception time of the synchronization signaland a reception time of the ultrasonic signal and generating a coordinate value; (d) in the stereoscopic image display unit, converting the coordinate value into a coordinate value in a 3D stereoscopic image space; and (e) displaying a 3D stereoscopic image where the position of the 3D information input device is displayed in the 3D stereoscopic image space to a user.

In the above aspect, an initialization step may be included before the step (b), and the initialization step may include steps of: (a1) in the 3D information input device, generating the synchronization signal an d the ultrasonic signal while being moved according to user's manipulation; and (a2) in the stereoscopic image display unit, measuring the position of the 3D information input device in the 3D real space by using the time difference between the reception time of the synchronization signal and the reception time of the ultrasonic signal, examining a movement range of the 3D information input device in the 3D real space, and mapping into a display range in the 3D stereoscopic image space.

In addition, in the step (d), the coordinate value of the 3D information input device in the 3D real space may be converted into the coordinate value in the 3D stereoscopic image space according to a result of the mapping of the step (a2).

[Advantageous Effects]

In a 3D stereoscopic image display system according to the first embodiment of the present invention, a 3D information input device receives a synchronization signal used for controlling shutter glasses in a conventional stereoscopic image display unit and generates an ultrasonic signal. A stereoscopic image display unit receives the ultrasonic signal through ultrasonic wave reception units installed at a plurality of areas, measures a distance between the 3D information input device and each of the ultrasonic wave reception units by using a time difference between a generation time of the synchronization signal and a reception time of the ultrasonic signal and measures a position of the 3D information input device in the 3D real space by using the distances.

In addition, in a 3D stereoscopic image display system according to the second embodiment of the present invention, a stereoscopic image display unit generates an ultrasonic synchronization signal for 3D information input. A 3D information input device receives the ultrasonic synchronization signal and generates an ultrasonic signal. The stereoscopic image display unit receives the ultrasonic signal through ultrasonic wave reception units insalled at a plurality of areas, measures a distance between the 3D information input device and each of the ultrasonic wave reception units by using a time difference between a generation time of the ultrasonic synchronization signal and a reception time of the ultrasonic signal, and measures a position of the 3D information input device in the 3D real space by using the distances.

In addition, in the 3D information input device according to the third embodiment of the present invention, a 3D information input device generates an ultrasonic synchronization signal and an ultrasonic signal, measures a distance between the 3D information input device and each of ultrasonic wave reception units by using a time difference between a reception time of the ultrasonic synchronization signal received by a stereoscopic image display unit and a reception time of the ultrasonic signal, and measures a position of the 3D information input device in the 3D real space by using the distances.

The mesuared position of the 3D information input device in the 3D real space is converted into the coordinate in the 3D stereoscopic image space. The position of the 3D information input device functioning as a mouse or a remote controller is stereoscopically displayed on the 3D stereoscopic image, so that click information or menu selection information can be input.

In addition, in the present invention, a synchronization signal logic used for a convetional stereoscopic image display unit is employed, so that it is possible to embody a 3D remote controller or a 3D mouse without an increase in cost caused by addition of the configuration.

[Description of Drawings]

Fig. 1 is a diagram illustrating an overall configuration of a 3D stereoscopic image display system according to a first embodiment of the present invention

Fig. 2 is a block diagram illustrating a configuration of a stereoscopic image display unit according to the first embodiment of the present invention.

Fig. 3 is a diagram illustrating a coordinate system conversion initialization process and an after-initialization coordinate system conversion process according to an embodiment of the present invention.

Fig. 4 is a block diagram illustrating a configuration of an information input module according to the embodiment of the present invention.

Fig. 5 is a diagram for explaining a method of measuring a position of a 3D information input device according to the embodiment of the present invention.

Figs. 6 to 8 are diagram for explaining a method of measuring a position of a 3D information input device by a position measurement unit.

Fig. 10 is a flowcart for explaining a method of inputting information by using a 3D information input device in the stereoscopic image display unit according to the embodiment of the present invention.

Fig. 11 is a diagram illustrating an overall configuration of a 3D stereoscopic image display system according to a second embodiment of the present invention.

Fig. 12 is a diagram illustrating an overall configuration of a 3D stereoscopic image display system according to a third embodiment of the present invention.

Fig. 13 is a flowcart for explaining a method of inputting information by using a 3D information input device in the stereoscopic image display unit according to the third embodiment of the present invention.

Fig. 14 is a diagram illustrating an example hwere an information input module included in the stereoscopic image display unit according to the first to third embodiment of the present invention is configured as an external type module.

[Best Mode]

Hereinafter, exemplary embodiments of the present invention will be described with reference to the accompanying drainwgs.

The present invention can be applied to various types of stereoscopic image display unites such as a shutter glasses type and a polarizing type. Since the configurations of each of the stereoscopic image display units are well known, detailed description of the same functions as those of the conventional stereoscopic image display unit will be omiited, and specific configurations of the present invention will be mainly described. In addition, a real space where a 3D information input device is moved is referred to as a "3D real space", and a 3D stereoscopic space output by a stereoscopic image display unit is referred to as a "stereoscopic image space".

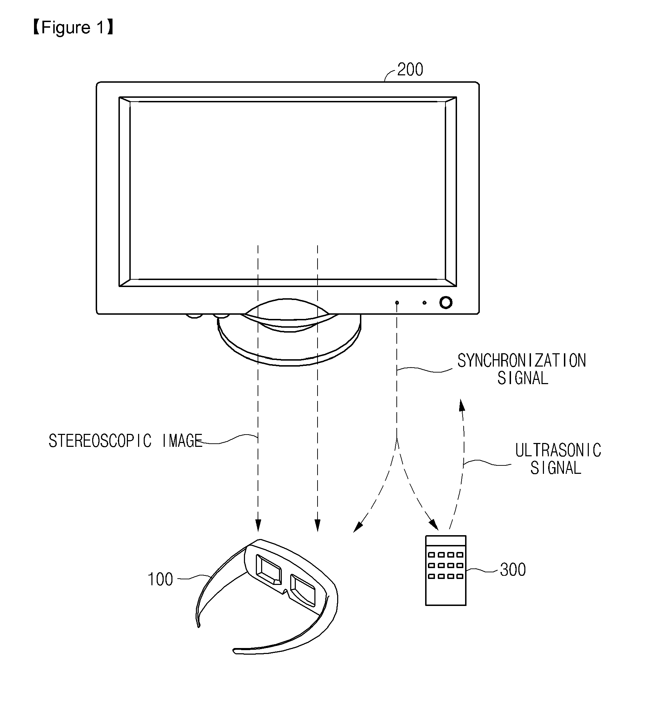

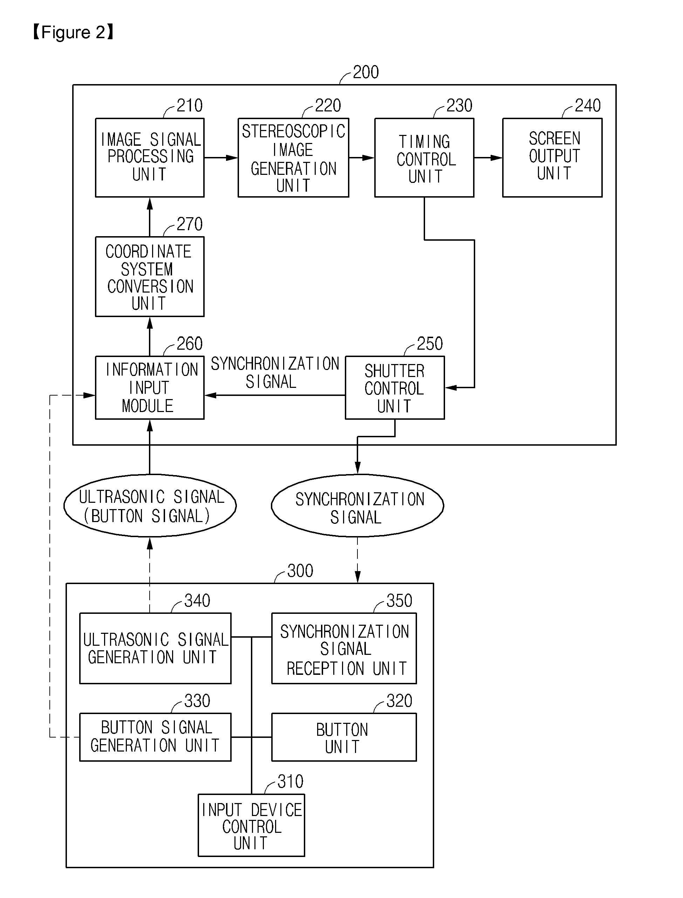

Fig. 1 is a diagram illustrating an overall configuration of a 3D stereoscopic image display system according to a first embodiment of the present invention, and Fig. 2 is a block diagram illustrating detailed configurations of a stereoscopic image display unit 200 and a 3D information input device 300 according to the first embodiment of the present invention. Hereinafter, the configurations will be described with reference to Figs. 1 and 2.

The first embodiment of the present invention is an example of applying the present invention to a shutter glasses type stereoscopic image display unit. Referring to Fig. 1, the 3D stereoscopic image display system according to the first embodiment of the present invention includes a stereoscopic image display unit 200, shutter glasses 100, and a 3D information input device 300.

First, the type of the shutter glasses 100 is the same as that of the shutter glasses 100 used in the conventional stereoscopic image display units 200. The shutter glasses 100 receives a synchronization signal from the stereoscopic image display unit 200 and alternately blocks left and right eyes.

The 3D information input device 300 receives the synchronization signal and generates an ultrasonic signal to notify the stereoscopic image display unit 200 of a position the 3D information input device 300 in the 3D real space and transmit a button signal generated to be included in the ultrasonic signal or a button signal separated generated to the stereoscopic image display unit 200.

The 3D information input device 300 generates the ultrasonic signal according to the synchronization signal received from the stereoscopic image display unit 200 to notify the stereoscopic image display unit 200 of a position the 3D information input device 300 and changes a generation period of the ultrasonic signal or transmits an IR signal, a laser signal, a visible light signal, an RF signal, or the like, so that the button information on the button pushed by a user is transmitted to the stereoscopic image display unit 200.

The stereoscopic image display unit 200 performs the same functions as those of a general shutter glasses (100) type stereoscopic image display unit. In addition, the stereoscopic image display unit 200 measures a 3D position of the 3D information input device 300 by using the ultrasonic signal received from the 3D information input device 300 and perform mapping of the measured position into the 3D stereoscopic image space displayed by the stereoscopic image display unit 200 to display the measured position.

In addition, the stereoscopic image display unit 200 measures a period of the received ultrasonic signal or receives a wireless signal such as an IR signal, a laser signal, a visible light signal, and an RF signal to identify the button pushed by the user in the 3D information input device 300, so that the function corresponding to the button is displayed on a stereoscopic image.

For example, in the state where the stereoscopic image display unit 200 displays a plurality of menu items in the 3D stereoscopic space, if a user moves a cursor in the 3D stereoscopic space by moving the 3D information input device 300 in the 3D real space to locate the cursor on a to-be-selected menu item and pushes a selection button, the menu item in the 3D space is selected, so that the menu item is performed.

Referring to Fig. 2, the 3D information input device 300 basically includes a synchronization signal reception unit 350 which receives a synchronization signal, an ultrasonic signal generation unit 340 which generates an ultrasonic signal, a button unit 320 which includes a plurality of function buttons, and an input device control unit 310 which controls these components. In the case where a button signal is not contained in the ultrasonic signal but it is trasmited as a separate RF or IR signal, the 3D information input device 300 may further include a button signal generation unit 330 which generates the button signal.

Immediately or by a certain time differene from the time when the synchronization signal is received by the synchronization signal reception unit 350, the input device control unit 310 controls the ultrasonic signal generation unit 340 to generate the ultrasonic signal. If a user pushes a button, the input device control unit 310 transmits an ultrasonic signal containing button signal to the stereoscopic image display unit 200 or controls the button signal generation unit 330 to generate a separate button signal such as an IR signal or an RF signal to transmit the button signal to the stereoscopic image display unit 200.

The stereoscopic image display unit 200 is configured to include an image signal processing unit 210, a stereoscopic image generation unit 220, a timing control unit 230, a screen output unit 240, a shutter control unit 250, an information input module 260, and a coordinate system conversion unit 270.

The image signal processing unit 210 generates an outputable image signal by decoding a video signal input from an external apparatus so that the image signal can be displayed on the stereoscopic image display unit 200. Otherwise, the image signal processing unit 210 generates an image signal by reproducing moving picturefiles stored in a strage unit such as a CD-ROM, a DVD-ROM, a hard disk drive of a computer. The image signal processing unit 210 outptus the image signal to the stereoscopic image generation unit 220.

In addition, the image signal processing unit 210 receives the coordinate of the 3D information input device 300 in the 3D stereoscopic image space as an input from the coordinate system conversion unit 270 and generates the image signal so that a pointer indicating a position of the 3D information input device 300 is contained in the 3D stereoscopic image space and outputs the image signal to the stereoscopic image generation unit 220. the stereoscopic image generation unit 220 converts the image signal input from the image signal processing unit 210 into a left-eye image signal and a right eye image signal to output the left-eye and right eye image signals to the timing control unit 230.

The timing control unit 230 outputs a left-eye image signal and a right eye image signal input from the stereoscopic image generation unit 220 to the screen output unit 240 at a certain time interval (the time interval may be changed in the middle of the process), and at the same time, generates a timing signal to output the timing signal to the shutter control unit 250.

The screen output unit 240 is constructed with a display panel such as an LCD panel and an organic EL panel used for general display apparatuses and a driver circuit for driving the display panel. The screen output unit 240 displays the left-eye image signal and the right eye image signal input from the timing control unit 230 to the user.

In cooperation with the timing control unit 230, the shutter control unit 250 senses that the timing control unit 230 outputs the left-eye image signal and the right eye image signal at a certain time interval (the time interval may be changed in the middle of the process) and at the same time, generates the synchronization signal to transmit the synchronization signal to the shutter glasses 100 and simultaneously to output the synchronization signal to the information input module 260.

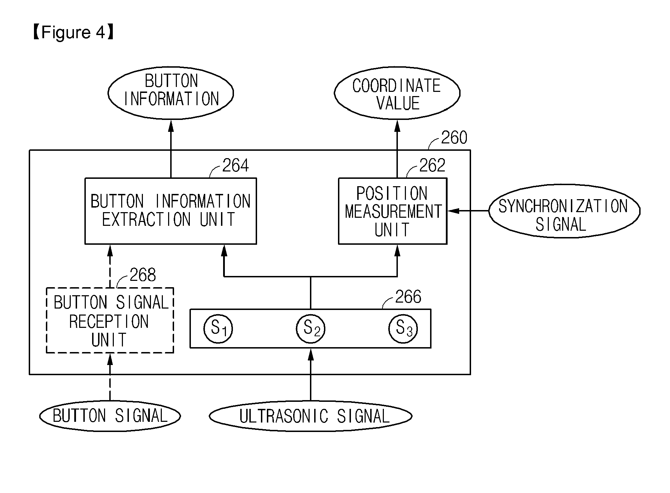

The information input module 260 measures the position of the 3D information input device 300 in the 3D real space by using a time difference between the input time of the synchronization signal input from the shutter control unit 250 and the reception time of the ultrasonic signal to output the position information to the coordinate system conversion unit 270. The configuration of the information input module 260 is described in detail with reference to Fig. 4.

The coordinate system conversion unit 270 converts the coordinate of the 3D information input device 300 in the 3D real space where the user is located into the coordinate in the 3D stereoscopic image space output by the screen output unit 240. If the user sets initialization before inputting the information by using the 3D information input device 300 according to the present invention, the coordinate system conversion unit 270 examines the movement ragne of the 3D information input device 300 which are moved for the initialization by the user. The coordinate system conversion unit 270 maps the maximum range of the position of the 3D information input device 300 which is moved in the 3D real space for the initialization by the user, into the maximum range of the 3D stereoscopic image space output by the screen output unit 240 and maps the real 3D coordinate into the coordinate in the 3D stereoscopic image space to output the coordinate.

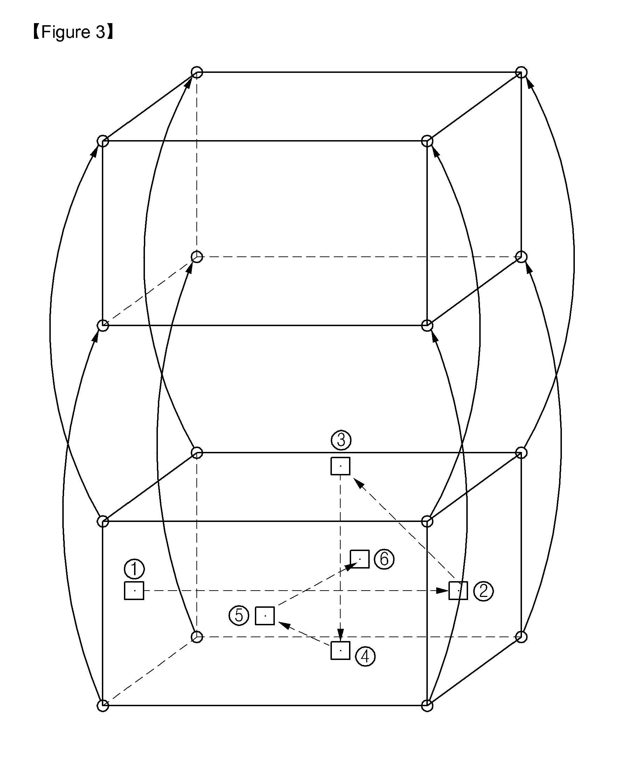

Fig. 3 is a diagram for explaining a coordinate system conversion initialization process and an after-initialization coordinate system conversion process according to an embodiment of the present invention. The coordinate value in the real space in Fig. 3 is calculated according to the mehod described later with reference to Fig. 4.

Referring to Fig. 3, the user pushes the initialization button at the position where the 3D information input device 300 is to be used for the initialization (for exmale, at a position where the user sits in a chair in front of a desk or at a positon where the user sit on a sofa). As illustrated in Fig. 3, the user moves the 3D information input device 300 leftward and rightward (①->② in the X axis direction), upward and downward (③->④ in the Z axis direction), and forward and backward (⑤->⑥ in the Y axis direction), and after that, the user pushes the initialization button, so the movable range of the 3D information input device 300 in the 3D real space is input.

The information input module 260 examines the 3D coordinate of the 3D information input device 300 in real time during the period from the time that the initialization button is pushed to the time that the initialization button is pushed again to generate the maxium movable range in the 3D real space by using the maximum coordinate values in the X, Y, and Z axis directions as illustrated by the solid line of Fig. 3. The information input module 260 maps this range into the maximum range in the 3D stereoscopic image space displayed by the stereoscopic image display unit 200. After that, the coordinate system conversion unit 270 converts the coordinate in the 3D real space input from the information input module 260 into the coordinate in the 3D stereoscopic image space in real time according to a result of the mapping performed in the intialziatioln step and outputs the coordinate to the image signal processing unit 210.

Fig. 4 is a block diagram illustrating a configuration of an information input module 260 according to an embodiment of the present invention.

Referring to Fig. 4, the information input module 260 according to the embodiment of the present invention includes a plurality of the ultrasonic wave reception units 266 which are disposed to be separated from each other, a position measurement unit 262, and a button information extraction unit 264.

A PLURALITY OF the ultrasonic wave reception units 266 are disposed to be separated from each other. The ultrasonic wave reception units 266 receives the ultrasonic signal generated by the 3D information input device 300 and outputs the ultrasonic signal to the position measurement unit 262 and the button information extraction unit 264.

The button information extraction unit 264 examines the ultrasonic signal received by the ultrasonic wave reception unit 266 to generate corresponding button information. If the button information is generated, the 3D information input device 300 changes the generation period of the ultrasonic signal and transmits the button information together with the ultrasonic signal. For example, assuming that three to five pulses are generated when when one ultrasonic signal is generated in correspondence to the synchronization signal, the button information may be transmitted to the stereoscopic image display unit 200 while changing the period of generating three to five pulses, and the button information extraction unit 264 may extract the button information by examining the generation period of the ultrasonic wave pulses.

In addition, in the case where the 3D information input device 300 transmits the button information by using an IR signal, a laser signal, or a visible light signal, an RF signal, or the like, as illustrated by a dotted line of Fig. 4, the button signal reception unit 268 which is contructed with a sensor receing the button signal is additionally installed inside the information input module 260, and the button signal reception unit 268 receives the button signal and outputs the button signal to the button information extraction unit 264.

Since functions relating to the button signal exracted by the button information extraction unit 264 are associated with functions of a display unit such as menu selection, brightness adjustmemt, and volume adjustment, detailed description thereof is omitted.

The position measurement unit 262 measures the 3D real position of the 3D information input device 300 by using a time difference between the input time of the synchronization signal and the input time of the ultrasonic signal received and input by each of the ultrasonic wave reception units 266 and outputs a position coordinate value to the coordinate system conversion unit 270.

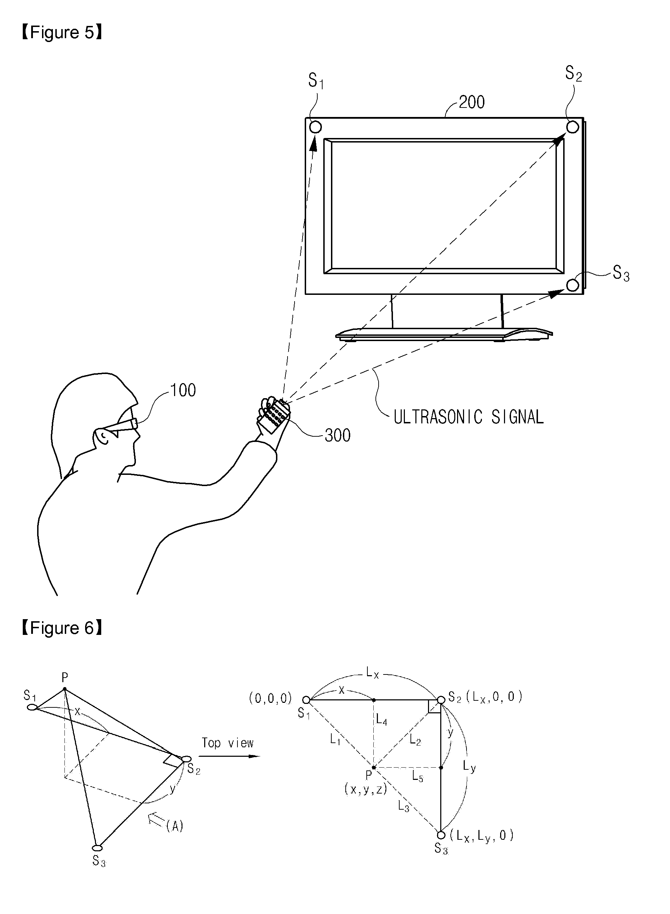

Fig. 5 is a diagram for explaining a method of measuring a position of the 3D information input device 300 according to the embodiment of the present invention.

Referring to Fig. 5, a plurality of ultrasonic wave reception units 266 S1, S2, and S3 are installed at a plurality of positions of the stereoscopic image display unit 200 according to the present invention. It should be noted that a plurality of the ultrasonic wave reception units 266 are not installed in a row in order to measure a 3D position.

Immediately from the time when the 3D information input device 300 receives a synchronization signal such as an IR signal or an RF signal which is transmitted from the stereoscopic image display unit 200 to the shutter glasses 100, the 3D information input device 300 generates an ultrasonic signal (otherwise, the 3D information input device 300 may generate an ultrasonic signal by a certain time difference from the time).

The ultrasonic signal generated by the 3D information input device 300 is received by each of the ultrasonic wave reception units 266 and output to the position measurement unit 262. The position measurement unit 262 measures a 3D real position of the 3D information input device 300 by using a time difference between the transmission time of the synchronization signal and the reception time of the ultrasonic signal received by each of the ultrasonic wave reception units 266.

Figs. 6 to 8 are diagram for explaining a method where the position measurement unit 262 measures a position of the 3D information input device 300.

An example of a method of calculating a coordinate value of the 3D information input device 300 is described with reference to Figs. 6 to 9. First, as illustrated in Fig. 6, three sensors constituting the ultrasonic wave reception unit 266 are indicated by S1, S2, and S3. The sensors are installed on the same plane to be perpendicular to each other as illustrated in Fig. 6. For the convenience of desdription, the coordinates of the sensors are set by (0, 0, 0), (Lx, 0, 0), and (Lx, Ly, 0). The coordinate of the position P of the 3D information input device 300 in the 3D space is denoted by (x, y, z).

At this time, a distance Lx between the sensors S1 and S2 and a distance $L_y$ between the sensors S2 and S3 are known values, and a distance L1 between the 3D information input device 300 (P) and the sensor S1 and a distance L2 between the 3D information input device 300 and the sensor S2, and a distance L3 between the 3D information input device 300 and the sensors S3 can be obtained by using a time difference between the transmission time of the synchronization signal and the reception time of the ultrasonic signal received by each of the ultrasonic wave reception units 266.

More specifically, since the synchronization signal which is an IR signal or an RF signal is transmitted at the speed of light, it is assumed that the synchronization signal is received by the 3D information input device 300 simulteansouly when the synchronization signal is transmitted from the stereoscopic image display unit 200.

In addition, in the case werhe the 3D information input device 300 generates the ultrasonic singal immediately from the time when the 3D information input device 300 receives the synchronization signal, it may be considered that the ultrasonic signal is generated by the 3D information input device 300 at the same time when the 3D information input device 300 transmits the synchronization signal. The time difference between the transmission time of the synchronization signal and the reception time of the ultrasonic signal may be considered to be the time taken for the ultrasonic signal generated by the 3D information input device 300 to propagate through the air and reach the ultrasonic wave reception unit 266.

Since the ultrasonic signal propagates through the air at a speed of 340 m/s, a distance between the ultrasonic wave reception unit 266 and the 3D information input device 300 can be obtained by multiplying the propagraing speed (340 m/s) of the ultrasonic signal with the propagaring time (a time difference between the transmission time of the synchronization signal and the reception time of the ultrasonic signal).

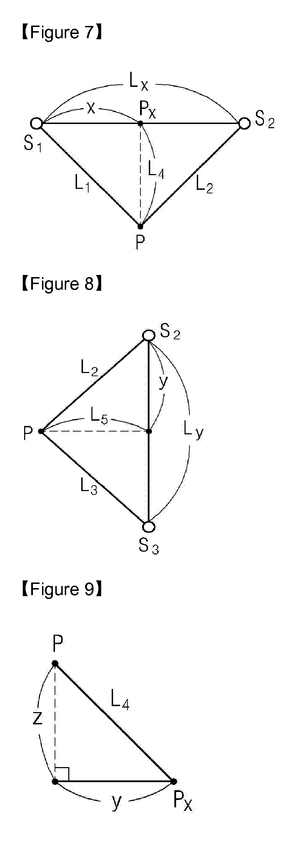

Referring to Fig. 7 again, with respect to the x coordinate of the 3D information input device 300 illustrated in Fig. 7, if three sides of a triangle is set to have lengths $L_1$, $L_2$, and $L_x$, the following Equation 1 is satisfied. By soliving Equation 1 with respect to x, the X coordinate value can be obtained as expressed by the following Equation 2.

**【Equation 1】**

$$L_1^2 = x^2 + L_4^2$$

$$L_2^2 = (L_x - x)^2 + L_4^2$$

**【Equation 2】**

$$x = \frac{L_x^2 + L_1^2 - L_2^2}{2L_x}$$

On the other hand, with respect to the y coordinate of the 3D information input device 300 illustraed in Fig. Fig. 8, if three sides of a triangle is set to have lengths $L_2$, $L_3$, and $L_y$, similarly to the method of calculating the aforementioned Equation 1, the y coordinate value can be obtained as expressed by the following Equation 3.

**【Equation 3】**

$$y = \frac{L_y^2 + L_2^2 - L_3^2}{2L_y}$$

In addition, as seen in the A direction of Fig. 6, as illustrated in Fig. 9, three sides of a triangle can be set to have lengths $L_4$, y, and z. By using this triangle, the value of z can be obtained as expressed by the following Equation 4.

**【Equation 4】**

$$z = \sqrt{L_1^2 - x^2 - y^2}$$

As described above, the coordinate value of the 3D information input device 300 in the 3D space can be obtained according to Equations 1 to 4. In addition, the position coordinate of the 3D information input device 300 may also be measured by using various methods other than the mehod using Equations 1 to 4 described above.

Hereinbefore, the configurations of the 3D stereoscopic image display systems according to the embodiments of the present invention are described.

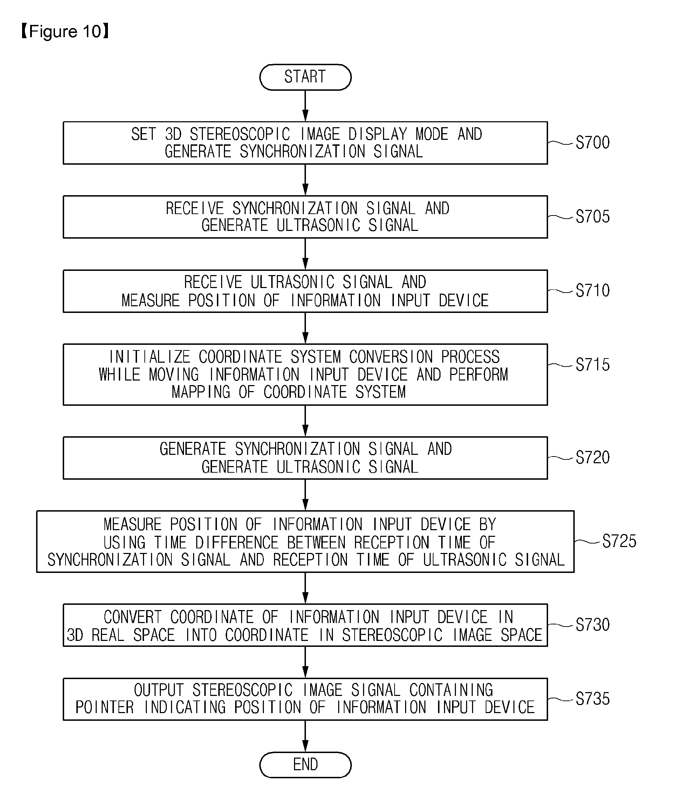

Fig. 10 is a flowchart for explaining a method of inputting information by using the 3D information input device 300 in the stereoscopic image display unit 200 according to the first embodiment of the present invention.

Since the steps illustrated in Fig. 10 are described above in detail with reference to Figs. 1 to 6, the detailed description thereof is omitted, and only the overview is described.

First, if the stereoscopic image display unit 200 is powered on and a 3D stereoscopic image display mode is set, the stereoscopic image display unit 200 generates a synchronization signal at a predetermined time period (the time period may be changed in the interim) (Step S700).

In addition, if the synchronization signal is generated, the 3D information input device 300 generates an ultrasonic signal immediately from the time when the synchronization signal is received (Step S705).

The stereoscopic image display unit 200 receives the ultrasonic signal and measures a position of the 3D information input device 300 to generate a coordinate value (Step S710). Although the position of the 3D information input device 300 is measured by the time of Step S71 0, the coordinate systems are not mapped to each other. Accordingly, any pointer indicating the position of the 3D information input device 300 is not displayed on the stereoscopic image display unit 200.

After that, as described with reference to Fig. 3, in order to initialize coordinate system conversion process using the 3D information input device 300, a user inputs a movement range by moving the 3D information input device 300 leftward and rightward, upward and downward, and forward and backward (Step S715). If the initialization is completed in Step S715, the space where the 3D information input device 300 can be moved by the user and the space where the stereoscopic image is displayed by the stereoscopic image display unit 200 are mapped into each other.

After the initialization is completed, the stereoscopic image display unit 200 continually generates a synchronization signal at a predetermined time period (the time period may be changed in the interim). If the 3D information input device 300 receives the synchronization signal, the 3D information input device 300 generates an ultrasonic signal (Step S720).

If the stereoscopic image display unit 200 receive the ultrasonic signal, the stereoscopic image display unit 200 measures a position of the 3D information input device 300 by using a time difference between the generation time of the synchronization signal and the reception time of the ultrasonic signal received by each of the ultrasonic wave reception units 266 according to Equations 1 to 4 described above (Step S725).

After that, the stereoscopic image display unit 200 converts the coordinate value of the 3D information input device 300 in the 3D real space into the coordinate value displayed in the 3D stereoscopic image space (Step S730).

The stereoscopic image display unit 200 generates and outputs a stereoscopic image signal including a pointer indicating the position of the 3D information input device 300 according to the converted coordinate value (Step S735).

Hereinbefore, the stereoscopic image display unit 200 and the image display method according to the embodiement of the present invention are described. It should be noted that various modified examples can be desribed within the technical scope of the present invention and these modified examples are also included in the scope of the present invention.

For example, in the aforementioned embodiment of the present invention, the 3D information input device 300 generates the ultrasonic signal immediately from the time when the synchronization signal is received. However, the 3D information input device 300 may also generate the ultrasonic signal by a certain time difference from the time when the synchronization signal is received. In this case, the stereoscopic image display unit 200 recognizes such a time difference between the reception time of the synchronization signal and the generation time of the ultrasonic signal in advance, and the stereoscopic image display unit 200 may measure the position of the 3D information input device 300 by taking into consideration the time difference.

In addition, in the embodiments of the present invention described above, although the case where the ultrasonic signal is generated every synchronization signal received by the 3D information input device 300 is described, in the case where the synchronization signal generation period is too short, the 3D information input device 300 may generate one ultrasonic signal every two synchronization signals, or the 3D information input device 300 may generate one ultrasonic signal every three synchronization signals or every four synchronization signals. In this case, it needs to be set in advance at which of the synchronization signal the the ultrasonic signal is generated, and the stereoscopic image display unit 200 and the 3D information input device 300 needs to recognize at which of the synchronization signal the the ultrasonic signal is generated.

Various methods of identifying the synchronization signal where the ultrasonic signal is generated can be used. As the simplest method, a pulse width of the synchronization signal before the generation of the ultrasonic signal is set to be longer than those of other synchronization signals, and if the 3D information input device receives the synchronization signal having a long pulse width, the 3D information input device generates the ultrasonic signal at the next synchronization signal.

As described hereinbefore, in the case where the stereoscopic image display unit 200 is embodied as a 3D TV, the 3D information input device 300 according to the present invention may function as a 3D remote controller. In the case where the stereoscopic image display unit 200 is embodied as a 3D monitor, the 3D information input device 300 may function as a 3D mouse.

For example, in the case where the 3D information input device 300 according to the embodiment of the present invention is embodied as a 3D mouse and the stereoscopic image display unit 200 is embodied as a 3D monitor, with respct to an item separated by long distance from a user in a 3D stereoscopic image, the user streches the 3D information input device 300 forward from the body in a real space to click the item; and with respect to an item located near the user, the user move the 3D information input device 300 to a position near the body to click the item.

The stereoscopic image display unit 200 described above according to the present invention can be applied to all applications executed by using a 3D TV or a 3D monitor such as a 3D video game describd above.

Hereinbefore, the 3D stereoscopic image display system and the 3D stereoscopic image display method using the same according to the first embodiment of the present invention are described. In the first embodiment of the present invention described above, the synchronization signal for controlling the timing of allowing the 3D information input device 300 to generate the ultrasonic signal is used together with the synchronization signal for controlling the shutter glasses.

In second and third embodiments of the present invention described hereinafter, a synchronization signal (hereinafter, referred to as a " ultrasonic synchronization signal" in order to distinguish this singal from the synchronization signal for controlling the shutter glasses) for measuring the position of the 3D information input device 300 is separately generated. Therefore, these embodiments can be applied to all types of 3D stereoscopic imaging apparatuss besides the aforementioned shutter glasses type, and in the state where the stereoscopic image display unit displays a plurality of menu items in the 3D stereoscopic space, if a user moves a cursor in the 3D stereoscopic space by moving the 3D information input device in the 3D real space to locate the cursor on a to-be-selected menu item and pushes a selection button, the menu item in the 3D space is selected, so that the menu item is performed. In this manner, basic functions of these embodiments are the same as those of the first embodiment.

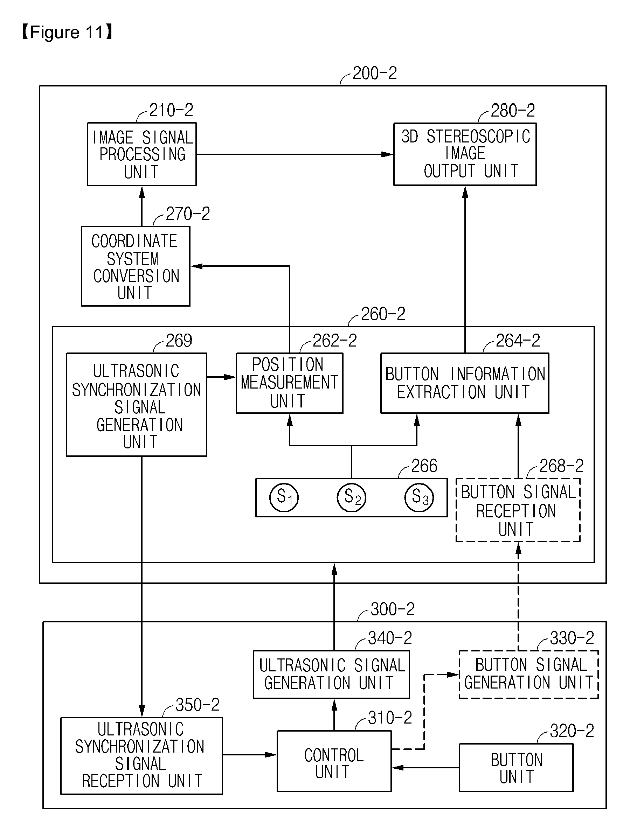

Fig. 11 is a diagram illustrating an overall configuration of a 3D stereoscopic image display system according to a second embodiment of the present invention.

Referring to Fig. 11, the 3D stereoscopic image display system according to the second embodiment of the present invention includes a stereoscopic image display unit 200-2 and a 3D information input device 300-2.

The functions of the stereoscopic image display unit 200-2 are the same as those of the stereoscopic image display unit 200 according to the first embodiment described above except that the stereoscopic image display unit 200-2 separately generates and transmits an ultrasonic wave generation synchronization signal for instructing the 3D information input device 300-2 to generate an ultrasonic signal as well as the synchronization signal for synchronizing the shutter glasses. Therefore, hereinafter, the difference from the first embodiment will be mainly described.

The stereoscopic image display unit 200-2 includes an image signal processing unit 210-2, a coordinate system conversion unit 270-2, a 3D stereoscopic image output unit 280-2, and an information input module 260-2.

The functions of the image signal processing unit 210-2 and the coordinate system conversion unit 270-2 are the same as those of the image signal processing unit 210 and the coordinate system conversion unit 270 of the first embodiment described above, and thus, detailed description thereof is omitted.

The 3D stereoscopic image output unit 280-2 outputs the 3D stereoscopic image to the user by using the image signal input from the image signal processing unit 210-2. In addition, the 3D stereoscopic image output unit 280-2 outputs the button information or the like input from the information input module 260 together with the 3D stereoscopic image. The functions of the 3D stereoscopic image output unit 280-2 are the same as those of a general 3D stereoscopic image output apparatus such as a convetional 3D TV except that the position of the 3D information input device 300-2 is further displayed, and thus, detailed description thereof is omitted.

On the other hand, the aforementioned information input module 260-2 includes a position measurement unit 262-2, a button information extraction unit 264-2, a plurality of the ultrasonic wave reception units 266 which are disposed to be separated from each other, a button signal reception unit 268-2, and an ultrasonic synchronization signal generation unit 269.

The ultrasonic synchronization signal generation unit 269 generates an ultrasonic synchronization signal instructing the 3D information input device to generate an ultrasonic signal and, at the same time, output a control signal indicating that the ultrasonic synchronization signal is generated to the position measurement unit 262-2. The ultrasonic synchronization signal may be an IR signal, a laser signal, a visible light sgnal, an RF signal, or the like.

Similarly to the first embodiment, a plurality of the ultrasonic wave reception units 266 which are disposed to be separated from each each receive the ultrasonic signal to output the ultrasonic signal to the position measurement unit 262-2 and the button information extraction unit 264-2.

The position measurement unit 262-2 measures the position to output the position to the coordinate system conversion unit 270-2 and the button information extraction unit 264-2 extracts the button information in the same method as that of the first embodiment.

In the case where the button information is not contained in the ultrasonic signal but it is received as an separate button signal such as an RF signal, an IR signal, a laser signal, or a visible light signal, the button signal reception unit 268-2 outputs the received button signal to the button information extraction unit 264-2. Therefore, in the case where an ultrasonic signal containing the button information is received, the button signal reception unit 268-2 may be omitted.

On the other hand, the 3D information input device 300-2 receives the ultrasonic synchronization signal from the stereoscopic image display unit 200-2 to generate the ultrasonic signal, and if the user pushss a button, the 3D information input device 300-2 transmits an ultrasonic signal which contains the button information corresponding to the pushed button or transmits a button signal which is separately generated.

The 3D information input device 300-2 includes an ultrasonic synchronization signal reception unit 350-2, an ultrasonic signal generation unit 340-2, a control unit 310-2, a button unit 320-2, and a button signal generation unit 330-2.

The ultrasonic synchronization signal reception unit 350-2 receives an ultrasonic synchronization signal from the stereoscopic image display unit 200 and outputs the ultrasonic synchronization signal to the control unit 310-2. If a control signal is input from the control unit 310-2, the ultrasonic signal generation unit 340-2 generates an ultrasonic signal.

The button unit 320-2 is constructed with a keypad including a plurality of buttons and keys. If a user pushes a button or a key, the button unit 320-2 generates button information corresponding to the button or the key and outputs the button information to the control unit.

In the case where the button information is not contained in the ultrasonic signal which is to be transmitted, the button signal generation unit 330-2 transmits a signal such as an IR signal, an RF signal, a laser signal, or a visible light signal which contains the button information to the stereoscopic image display unit. In the second embodiment of the present invention, in the case werhe the button information is transmitted by using the ultrasonic signal, the button signal generation unit 330-2 may be omitted.

If the ultrasonic synchronization signal is received, the control unit 310-2 outputs a control signal to the ultrasonic signal generation unit 340-2 at the same time or by a predetermined time difference. In addition, if the button information is input from the button unit 320-2, the control unit changes the generation period of the ultrasonic signal pulse, which is gernated by the ultrasonic signal generation unit 340-2, and transmits the button information together with the ultrasonic signal. In the case where the ultrasonic signal is not used to transmit the button information, the control unit outputs a control signal to a separate button signal generation unit 330-2 to transmit the button information.

On the other hand, a method of inputting information by using the 3D information input device 300-2 in the stereoscopic image display unit 200-2 according to the second embodiment of the present invention is the same as the method described with reference to Fig. 10 according to the first embodiment except that an additional ultrasonic synchronization signal for measuring a position of the 3D information input device, which is different from the synchronization signal in the first embodiment, is generated by a stereoscopic image display unit 200-2 in Step S700 and Step S720. Therefore, the detailed description thereof will be omitted.

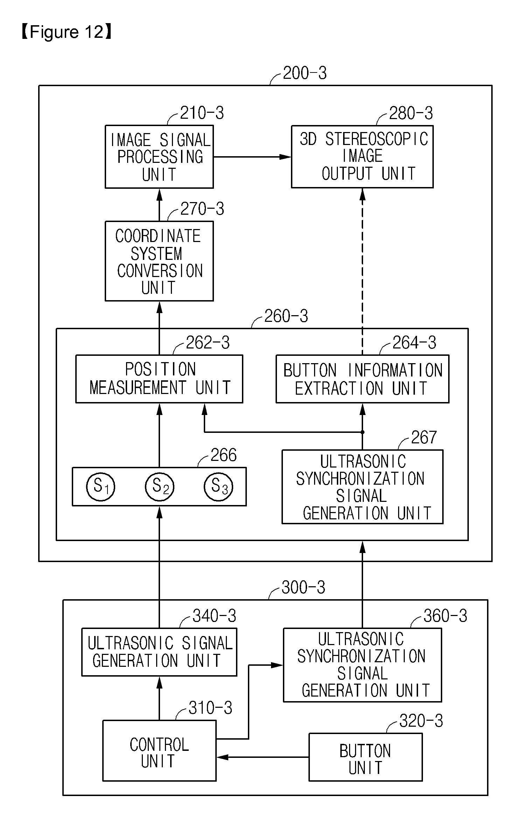

Fig. 12 is a diagram illustrating an overall configuration of a 3D stereoscopic image display system according to a third embodiment of the present invention.

Referring to Fig. 12, similarly to the second embodiment, in the third embodiment, the 3D stereoscopic image display system includes a 3D information input device 300-3 and a stereoscopic image display unit 200-3. The 3D stereoscopic image display system is different from those of the first and second embodiments described above in that a 3D information input device 300-3 generates an ultrasonic synchronization signal and a stereoscopic image display unit 200-3 receives the ultrasonic synchronization signal and an ultrasonic signal to mesure the position of the 3D information input device 300-3.

More specifically, the 3D information input device 300-3 includes an ultrasonic signal generation unit 340-3, a button unit 320-3, a control unit 310-3, and an ultrasonic synchronization signal generation unit 360-3.

The functions of the ultrasonic signal generation unit 340-3 and the button unit 320-3 are the same as those of the second embodiment described above, and if a control signal is input, the ultrasonic synchronization signal generation unit 360-3 generates an ultrasonic synchronization signal which may be an IR signal, an RF signal, a laser signal, a visible light signal, or the like.

The control unit 310-3 outputs the control signal to the ultrasonic signal generation unit 340-3 and the ultrasonic synchronization signal generation unit 360-3 at a predetermined time period (the time period may be changed in the interim) to generate the ultrasonic synchronization signal and the ultrasonic signal.

In addition, if the button information is input ffrom the button unit 320-3, the control unit 310-3 controls the ultrasonic synchronization signal generation unit 360-3 to transmit the button information together with the ultrasonic synchronization signal.

On the other hand, the stereoscopic image display unit 200-3 includes an image signal processing unit 210-3, a coordinate system conversion unit 270-3, a 3D stereoscopic image output unit 280-3, and an information input module 260-3.

The functions of the image signal processing unit 210-3, the coordinate system conversion unit 270-3, and the 3D stereoscopic image output unit 280-3 are the same as those of the image signal processing unit 210-2, the coordinate system conversion unit 270-2, and the 3D stereoscopic image output unit 280-2 according to the second embodiment described above, and thus, detailed description thereof is omitted.

On the other hand, according to the third embodiment of the present invention, the information input module 260-3 includes a position measurement unit 262-3, a button information extraction unit 264-3, a plurality of ultrasonic wave reception units 266 which are disposed to be separated from each each, and an ultrasonic synchronization signal reception unit 267.

Similarly to the first and second embodiments, a plurality of the ultrasonic wave reception units 266 which are disposed to be separated from each each receive the ultrasonic signal to output the ultrasonic signal to the position measurement unit 262-3. In the case where the 3D information input device 300 transmits the button information together with the ultrasonic signal, a plurality of the ultrasonic wave reception units 266 may output the ultrasonic signal to the button information extraction unit 264-3.

The ultrasonic synchronization signal reception unit 267 receives the ultrasonic synchronization signal generated by the 3D information input device 300-3 to output the ultrasonic synchronization signal to the position measurement unit and the button information extraction unit.

The position measurement unit 262-3 measures a distance between the 3D information input device 300-3 and each ultrasonic sensor by using a time difference between the reception time of the ultrasonic synchronization signal received by the ultrasonic synchronization signal reception unit 267 and the reception time of the ultrasonic signal received by the ultrasonic wave receiving sensor of each of the ultrasonic wave reception units 266 and measures the coordinate of the 3D information input device 300-3 to output the coordinate to the coordinate system conversion unit 270-3 in the same method as those of the first and second embodiments.

The button information extraction unit 264-2 extracts the button information from the ultrasonic synchronization signal and allows the content corresponding to the button information to be included in the 3D stereoscopic image.

Hereinbefore, the 3D stereoscopic image display system according to the third embodiment of the present invention is described.

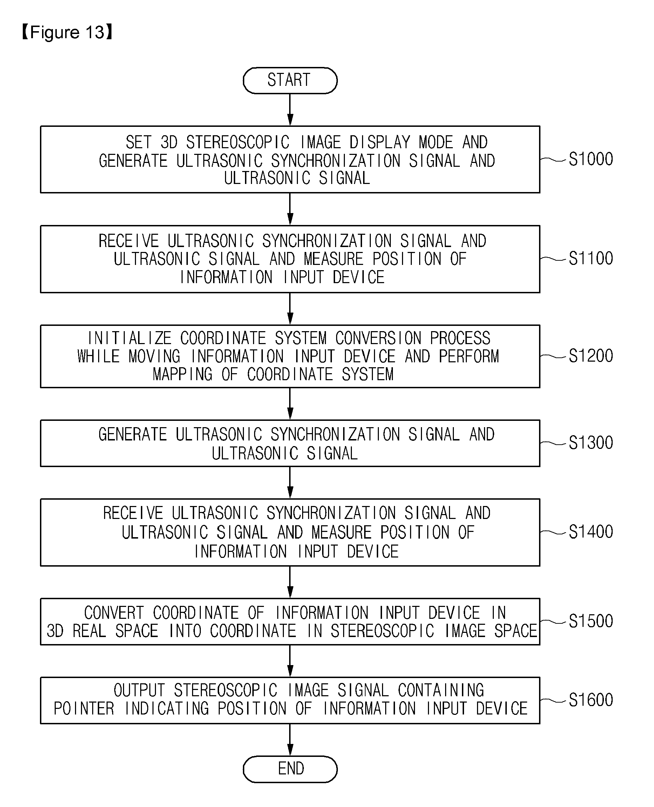

Fig. 13 is a flowchart for explaining a metho of inputting information by using the 3D information input device 300-3 in the stereoscopic image display unit 200-3 according to the third embodiment of the present invention.

Referring to Fig. 13, first, if the stereoscopic image display unit 200-3 and the 3D information input device 300-3 are powered on and a 3D stereoscopic image display mode is set, the 3D information input device 300-3 generates an ultrasonic synchronization signal and an ultrasonic signal at a predetermined time period (the time period may be changed) (Step S1000).

The stereoscopic image display unit 200-3 receives the ultrasonic synchronization signal and the ultrasonic signal and measures the position of the 3D information input device 300-3 to genetate the coordinate value of the 3D information input device 300-3 (Step S1100). Although the position of the 3D information input device 300-3 is measured in Step S1100, since the coordinate systems are not mapped into each other, the pointer indicating the position of the 3D information input device 300-3 is not displayed on the stereoscopic image display unit 200-3.

After that, as described with reference to Fig. 3, in order to initialize coordinate system conversion process using the 3D information input device 300-3, a user inputs a movement range by moving the 3D information input device 300-3 leftward and rightward, upward and downward, and forward and backward (Step S1200). If the initialization is completed in Step S1200, the space where the 3D information input device 300-3 can be moved by the user and the space where the stereoscopic image is displayed by the stereoscopic image display unit 200-3 are mapped into each other.

After the initialization is completed, the 3D information input device 300-3 continually generates an ultrasonic synchronization signal and an ultrasonic signal (Step S1300). If the stereoscopic image display unit 200-3 receives the ultrasonic synchronization signal and the ultrasonic signal, the stereoscopic image display unit 200-3 measures a position of the 3D information input device 300-3 by using a time difference between the reception time of the ultrasonic synchronization signal and the reception time of the ultrasonic signal received by the ultrasonic wave reception unit 266 according to Equations 1 to 4 described above (Step S1400).

After that, the stereoscopic image display unit 200-3 converts the coordinate value of the 3D information input device 300-3 in the 3D real space into the coordinate value displayed in the 3D stereoscopic image space (Step S1500).

The stereoscopic image display unit 200-3 generates and outputs a stereoscopic image signal including a pointer indicating the position of the 3D information input device 300-3 according to the converted coordinate value (Step S1605).

Hereinbefore, the 3D stereoscopic image display systems according to the first to third embodiments of the present invention and the 3D stereoscopic image display methods using the 3D stereoscopic image display systems are described.

In the above-described embodiments of the present invention, each of the information input modules 260, 260-2, and 260-3 may be installed to be built in the respective stereoscopic image display units 200, 200-2, and 200-3 at the time of manufacturing a stereoscopic image display system. Alternatively, the information input module may be provided as a separate external type product, the information input module may be connected to the stereoscopic image display unit 200, 200-2, or 200-3 through a communication means such as a USB port.

In the case where the information input module is installed as an external type product, instead of being input with the synchronization signal from the shutter control unit 250, the information input module 260 according to the first embodiment which is included in a general 3D stereoscopic image display unit may be input with a synchronization signal through a 3D port which outputs a signal synchronized with the shutter glass synchronization signal.

On the other hand, in the case of the second embodiment, the information input module 260-2 is not input with the synchronization signal from the stereoscopic image display unit 200-2, and a separate ultrasonic synchronization signal which is independent of the shutter glass synchronization signal is generated by the information input module 260-2. Therefore, the information input module 260-2 as an external type product is attached to the stereoscopic image display unit 200-2 to ouput only the position information and the button information of the 3D information input device 300-2 to the stereoscopic image display unit 200-2 through a communication means such as a USB port.

In addition, in the case of the third embodiment, since the ultrasonic synchronization signal is generated by the 3D information input device 300-3, the information input module 260-3 as an external type product is attached to the stereoscopic image display unit 200-3 to output only the position information and the button information of the 3D information input device 300-3 to the stereoscopic image display unit 200-3 through a communication means such as a USB port.

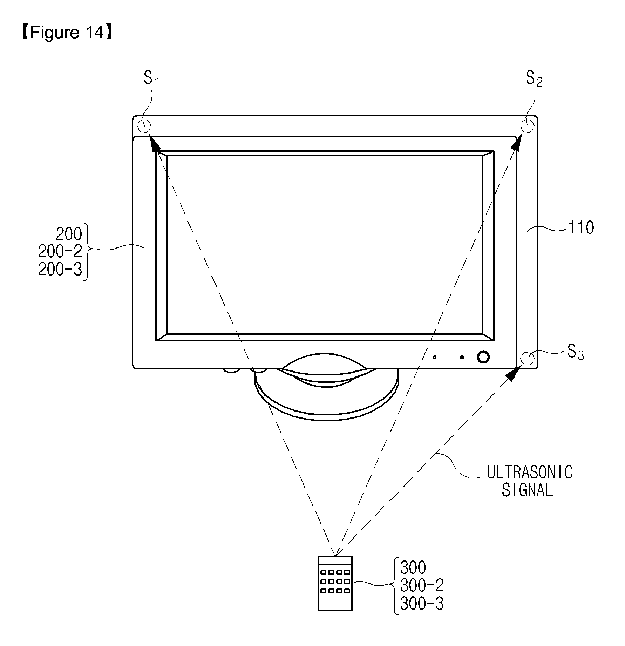

In this manner, in the case where the information input modules 260, 260-2, and 260-3 according to the present invention are installed as external type modules to the stereoscopic image display units 200, 200-2, and 200-3, as illustrated in Fig. 14, components constituting each of the information input modules 260, 260-2, and 260-3 may be contained in a ᅮ-shaped plastic case 110 to be coupled with an external case of each of the stereoscopic image display units 200, 200-2, and 200-3.

It should be noted that the stereoscopic image display units disclosed in Claims include both of a built-in information input module and an external type information input module.

The present invention can also be embodied as computer readable codes on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, and carrier waves (such as data transmission through the Internet). The computer-readable recording medium can also be distributed over network coupled computer systems so that the computer readable code is stored and executed in a distributed fashion.//

While the present invention has been particularly shown and described with reference to exemplary embodiments thereof, it will be understood by those skilled in the art that various changes in form and details may be made therein without departing from the spirit and scope of the invention as defined by the appended claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.

**Claims**

1. A 3D stereoscopic image display system comprising:

a 3D information input device which receives a synchronization signal from a stereoscopic image display unit and generates an ultrasonic signal; and
the stereoscopic image display unit which generates the synchronization signal, measures a position of the 3D information input device by using a time difference between a generation time of the synchronization signal and a reception time of the ultrasonic signal, and outputs a 3D stereoscopic image where the position of the 3D information input device is displayed.

2. The 3D stereoscopic image display system according to claim 1, wherein the stereoscopic image display unit performs mapping of a 3D real space into a 3D stereoscopic image space, converts a coordinate of the 3D information input device in the 3D real space into a coordinate in the 3D stereoscopic image space output by the stereoscopic image display unit, and displays the position of the 3D information input device.

3. The 3D stereoscopic image display system according to claim 2, wherein the stereoscopic image display unit displays the 3D stereoscopic image so that a menu item is displayed in the 3D stereoscopic space, and if a button signal is received from the 3D information input device, the stereoscopic image display unit selects the menu item located in the 3D stereoscopic space corresponding to the 3D information input device.

4. The 3D stereoscopic image display system according to claim 2, wherein the stereoscopic image display unit is input with a movement range of the 3D information input device at a position of a user and performs mapping of the 3D real space into the 3D stereoscopic image space by mapping the movement range of the 3D information input device into a display range of the 3D stereoscopic image space output by the stereoscopic image display unit, so that initialization is performed.

5. The 3D stereoscopic image display system according to claim 4, wherein after the initialization is finished, the stereoscopic image display unit converts the coordinate of the 3D information input device in the 3D real space into the coordinate of the 3D information input device in the 3D stereoscopic image space according to a result of the mapping performed in the initialization process.

6. The 3D stereoscopic image display system according to any one of claims 1 to 5, wherein the stereoscopic image display unit includes:

an image signal processing unit which decodes an image signal input from an external portion or an image signal stored in a storage medium to generate a stereoscopic image signal which can be output as a 3D stereoscopic image and allows a coordinate of the 3D information input device in the 3D stereoscopic image space which is input from a coordinate system conversion unit to be included in the stereoscopic image signal to output the stereoscopic image signal;
a 3D stereoscopic image output unit which outputs the stereoscopic image signal input from the image signal processing unit as a 3D image;
an information input module which generates the ultrasonic synchronization signal, measures the position of the 3D information input device in the 3D real space by using a time difference between the generation time of the ultrasonic synchronization signal and the reception time of the ultrasonic signal, and outputs a coordinate of 3D information input device; and
the coordinate system conversion unit which converts the coordinate of the 3D information input device in the 3D real space into the coordinate in the 3D stereoscopic image space output by the screen output unit and outputs the converted coordinate to the image signal processing unit.

7. The 3D stereoscopic image display system according to claim 6, wherein the information input module is installed as an external type module to the stereoscopic image display unit

8. The 3D stereoscopic image display system according to claim 6, wherein the information input module includes :

a synchronization signal generation unit which generates the synchronization signal;
a plurality of ultrasonic wave reception units which are separated from each other; and
a position measurement unit which generates a coordinate by measuring the position of the 3D information input device in the real space by using a time difference between the generation time of the synchronization signal and the reception time of the ultrasonic signal receivied by each of the ultrasonic wave reception units and outputs the generated coordinate to the coordinate system conversion unit.

9.  The 3D stereoscopic image display system according to claim 8, wherein the information input module further includes a button information extraction unit which checks the ultrasonic signals received by a plurality of the ultrasonic wave reception units to extract button information generated by the 3D information input device.

10. The 3D stereoscopic image display system according to claim 8, wherein the information input module further includes:

    a button signal reception unit which receives a button signal including button information generated by the 3D information input device; and
    a button information extraction unit which extracts the button information from the button signal.

11. The 3D stereoscopic image display system according to any one of claims 1 to 5, further comprising shutter glasses which alternately blocks left and right eyes of a user according to the synchronization signal.

12. The 3D stereoscopic image display system according to claim 11, wherein the 3D information input device generates the ultrasonic signal every a predetermined number of synchronization signals, which is defined in advance, among the synchronization signals.

13. The 3D stereoscopic image display system according to claim 11, wherein the stereoscopic image display unit includes:

    an image signal processing unit which decodes an image signal input from an external portion or an image signal stored in a storage medium to generate a stereoscopic image signal which can be output as a 3D stereoscopic image and allows a coordinate of the 3D information input device in the 3D stereoscopic image space which is input from a coordinate system conversion unit to be included in the stereoscopic image signal to output the stereoscopic image signal;
    a stereoscopic image generation unit which converts the stereoscopic image signal input from the image signal processing unit into a left-eye image signal and a right eye image signal;
a timing control unit which outputs the left-eye image signal and the right eye image signal;
a screen output unit which displays the left-eye image signal and the right eye image signal input from the timing control unit to a user;
a shutter control unit which senses that the timing control unit outputs the left-eye image signal and the right eye image signal in cooperation with the timing control unit and at the same time, generates the synchronization signal;
an information input module which measures the position of the 3D information input device in the 3D real space by using a time difference between the generation time of the synchronization signal generated by the shutter control unit and the reception time of the ultrasonic signal and outputs a coordinate of 3D information input device; and
a coordinate system conversion unit which converts the coordinate of the 3D information input device in the 3D real space into a coordinate in the 3D stereoscopic image space output by the screen output unit and outputs the coordinate to the image signal processing unit.

14. The 3D stereoscopic image display system according to claim 13, wherein the information input module is installed as an external type module to the stereoscopic image display unit.

15. The 3D stereoscopic image display system according to claim 13, wherein the information input module includes:

    a plurality of ultrasonic wave reception units which are disposed to be separated from each other; and
    a position measurement unit which generates the coordinate by measuring the position of the 3D information input device in the real space by using a time difference between a generation time of the synchronization signal and a reception time of the ultrasonic signal receivied by each of the ultrasonic wave reception units and outputs the generated coordinate to the coordinate system conversion unit.

16. The 3D stereoscopic image display system according to claim 15, wherein the information input module further includes a button information extraction unit which extracts the button information generated by the 3D information input device by examining the ultrasonic signals received by a plurality of the ultrasonic wave reception units.

17. The 3D stereoscopic image display system according to claim 15, wherein the information input module further includes:

 a button signal reception unit which receive a button signal including the button information generated by the 3D information input device; and
 a button information extraction unit which extracts the button information from the button signal.

18. A 3D stereoscopic image display system comprising:

 a 3D information input device which generates a synchronization signal and an ultrasonic signal; and
 a stereoscopic image display unit which measures a position of the 3D information input device by using a time difference between a reception time of the synchronization signal and a reception time of the ultrasonic signal and outputs a 3D stereoscopic image where the position of the 3D information input device is displayed.

19. The 3D stereoscopic image display system according to claim 18, wherein the stereoscopic image display unit performs mapping of the 3D real space into a 3D stereoscopic image space, converts a coordinate of the 3D information input device in the real space into a coordinate in the 3D stereoscopic image space output by the stereoscopic image display unit, and displays the position of the 3D information input device.

20. The 3D stereoscopic image display system according to claim 18, wherein the stereoscopic image display unit displays the 3D stereoscopic image so that a menu item is displayed in the 3D stereoscopic space, and if a button signal is received from the 3D information input device, the stereoscopic image display unit selects the menu item located in the 3D stereoscopic space corresponding to the 3D information input device.

21. The 3D stereoscopic image display system according to claim 18, wherein the stereoscopic image display unit is input with a movement range of the 3D information input device at a position of a user and performs mapping of the 3D real space into the 3D stereoscopic image space by mapping the movement range of the 3D information input device into a display range of the 3D stereoscopic image space output by the stereoscopic image display unit, so that initialization is performed.

22. The 3D stereoscopic image display system according to claim 21, wherein after the initialization is finished, the stereoscopic image display unit converts the coordinate of the 3D information input device in the 3D real space into the coordinate of the 3D information input device in the 3D stereoscopic image space according to a result of the mapping performed in the initialization process.

23. The 3D stereoscopic image display system according to any one of claims 18 to 22, wherein the stereoscopic image display unit includes:

 an image signal processing unit which decodes an image signal input from an external portion or an image signal stored in a storage medium to generate a stereoscopic image signal which can be output as a 3D stereoscopic image and allows a coordinate of the 3D information input device in the 3D stereoscopic image space which is input from a coordinate system conversion unit to be included in the stereoscopic image signal to output the stereoscopic image signal;
 a 3D stereoscopic image output unit which outputs the stereoscopic image signal input from the image signal processing unit as a 3D image;
 an information input module which measures the position of the 3D information input device in the 3D real space by using a time difference between a reception time of the synchronization signal and a reception time of the ultrasonic signal and outputs a coordinate of 3D information input device; and
 the coordinate system conversion unit which converts the coordinate of the 3D information input device in the 3D real space into the coordinate in the 3D stereoscopic image space output by the screen output unit and outputs the converted coordinate to the image signal processing unit.

24. The 3D stereoscopic image display system according to claim 23, wherein the information input module is installed as an external type module to the stereoscopic image display unit.

25. The 3D stereoscopic image display system according to claim 23, wherein the information input module includes:

 a synchronization signal reception unit which receives the synchronization signal;
 a plurality of ultrasonic wave reception units which are disposed to be separated from each other; and
 a position measurement unit which generates the coordinate by measuring the position of the 3D information input device in the real space by using a time difference between a reception time of the synchronization signal and a reception time of the ultrasonic signal receivied by each of the ultrasonic wave reception units and outputs the generated coordinate to the coordinate system conversion unit.

26. The 3D stereoscopic image display system according to claim 25, wherein the information input module further includes a button information extraction unit which extracts the button information generated by the 3D information input device by examining the ultrasonic signals received by a plurality of the ultrasonic wave reception units.

27. The 3D stereoscopic image display system according to claim 25, wherein the information input module further includes:

    a button signal reception unit which receive a button signal including the button information generated by the 3D information input device; and
    a button information extraction unit which extracts the button information from the button signal.

28. A 3D stereoscopic image display method comprising steps of:

    (b) in a stereoscopic image display unit, generating a synchronization signal and, in a 3D information input device which receives the synchronization signal, generaeting an ultrasonic signal;
    (c) in the stereoscopic image display unit, measuring a position of the 3D information input device in a 3D real space by using a time difference between a generation time of the synchronization signal and a reception time of the ultrasonic signal and generating a coordinate value;
    (d) in the stereoscopic image display unit, converting the coordinate value into a coordinate value in a 3D stereoscopic image space; and
    (e) displaying a 3D stereoscopic image where the position of the 3D information input device is displayed in the 3D stereoscopic image space to the user.

29. The 3D stereoscopic image display method according to claim 28,
    wherein an initialization step is included before the step (b), and wherein the initialization step includes steps of:

    (a1) in the stereoscopic image display unit, generating the synchronization signal and, in the 3D information input device which receives the synchronization signal, generating the ultrasonic signal while being moved according to user's manipulation; and

    (a2) in the stereoscopic image display unit, measuring the position of the 3D information input device in the 3D real space by using the time difference between the generation time of the synchronization signal and the reception time of the ultrasonic signal, examining a movement range of the 3D information input device in the 3D real space, and mapping into a display range in the 3D stereoscopic image space.

30. The 3D stereoscopic image display method according to claim 29, wherein in the step (d), the coordinate value of the 3D information input device in the 3D real space is converted into the coordinate value in the 3D stereoscopic image space according to a result of the mapping of the step (a2).

31. The 3D stereoscopic image display method according to claim 29, wherein in the step (b), the stereoscopic image display unit further includes shutter glasses which alternately blocks left and right eyes of the user according to the synchronization signal, and the 3D information input device generates the ultrasonic signal every a predetermined number of synchronization signals, which is defined in advance, among the synchronization signals.

32. A 3D stereoscopic image display method comprising steps of:

    (b) in a 3D information input device, generating a synchronization signal and an ultrasonic signal;
    (c) in a stereoscopic image display unit, measuring a position of the 3D information input device in a 3D real space by using a time difference between a reception time of the synchronization signal and a reception time of the ultrasonic signal and generating a coordinate value;
    (d) in the stereoscopic image display unit, converting the coordinate value into a coordinate value in a 3D stereoscopic image space; and
    (e) displaying a 3D stereoscopic image where the position of the 3D information input device is displayed in the 3D stereoscopic image space to a user.

33. The 3D stereoscopic image display method according to claim 32,
    wherein an initialization step is included before the step (b), and
    wherein the initialization step includes steps of:

    (a1) in the 3D information input device, generating the synchronization signal and the ultrasonic signal while being moved according to user's manipulation; and
    (a2) in the stereoscopic image display unit, measuring the position of the 3D information input device in the 3D real space by using the time difference between the reception time of the synchronization signal and the reception time of the ultrasonic signal, examining a movement range of the 3D information input device in the 3D real space, and mapping into a display range in the 3D stereoscopic image space.

34. The 3D stereoscopic image display method according to claim 33, wherein in the step (d), the coordinate value of the 3D information input device in the 3D real space is converted into the coordinate value in the 3D stereoscopic image space according to a result of the mapping of the step (a2).

【Figure 1】

200

SYNCHRONIZATION
SIGNAL

STEREOSCOPIC IMAGE

ULTRASONIC
SIGNAL

100

300

【Figure 2】

【Figure 3】

【Figure 4】

【Figure 5】

【Figure 6】

【Figure 7】

【Figure 8】

【Figure 9】

【Figure 10】

```
                        ┌─────────────┐
                        │    START    │
                        └─────────────┘
                               │
                               ▼
        ┌────────────────────────────────────────────────┐
        │ SET 3D STEREOSCOPIC IMAGE DISPLAY MODE AND       │──S700
        │ GENERATE SYNCHRONIZATION SIGNAL                  │
        └────────────────────────────────────────────────┘
                               │
                               ▼
        ┌────────────────────────────────────────────────┐
        │ RECEIVE SYNCHRONIZATION SIGNAL AND               │──S705
        │ GENERATE ULTRASONIC SIGNAL                       │
        └────────────────────────────────────────────────┘
                               │
                               ▼
        ┌────────────────────────────────────────────────┐
        │ RECEIVE ULTRASONIC SIGNAL AND                    │──S710
        │ MEASURE POSITION OF INFORMATION INPUT DEVICE     │
        └────────────────────────────────────────────────┘
                               │
                               ▼
        ┌────────────────────────────────────────────────┐
        │ INITIALIZE COORDINATE SYSTEM CONVERSION PROCESS  │──S715
        │ WHILE MOVING INFORMATION INPUT DEVICE AND PERFORM│
        │ MAPPING OF COORDINATE SYSTEM                     │
        └────────────────────────────────────────────────┘
                               │
                               ▼
        ┌────────────────────────────────────────────────┐
        │ GENERATE SYNCHRONIZATION SIGNAL AND              │──S720
        │ GENERATE ULTRASONIC SIGNAL                       │
        └────────────────────────────────────────────────┘
                               │
                               ▼
        ┌────────────────────────────────────────────────┐
        │ MEASURE POSITION OF INFORMATION INPUT DEVICE BY  │──S725
        │ USING TIME DIFFERENCE BETWEEN RECEPTION TIME OF  │
        │ SYNCHRONIZATION SIGNAL AND RECEPTION TIME OF     │
        │ ULTRASONIC SIGNAL                                │
        └────────────────────────────────────────────────┘
                               │
                               ▼
        ┌────────────────────────────────────────────────┐
        │ CONVERT COORDINATE OF INFORMATION INPUT DEVICE IN│──S730
        │ 3D REAL SPACE INTO COORDINATE IN STEREOSCOPIC    │
        │ IMAGE SPACE                                      │
        └────────────────────────────────────────────────┘
                               │
                               ▼
        ┌────────────────────────────────────────────────┐
        │ OUTPUT STEREOSCOPIC IMAGE SIGNAL CONTAINING      │──S735
        │ POINTER INDICATING POSITION OF INFORMATION INPUT │
        │ DEVICE                                           │
        └────────────────────────────────────────────────┘
                               │
                               ▼
                        ┌─────────────┐
                        │     END     │
                        └─────────────┘
```

【Figure 11】

【Figure 12】

【Figure 13】

```
                              ┌──────────┐
                              │  START   │
                              └────┬─────┘
                                   │
      ┌────────────────────────────▼────────────────────────────┐
      │     SET 3D STEREOSCOPIC IMAGE DISPLAY MODE AND           │
      │   GENERATE ULTRASONIC SYNCHRONIZATION SIGNAL AND         │──S1000
      │                  ULTRASONIC SIGNAL                       │
      └────────────────────────────┬────────────────────────────┘
                                   │
      ┌────────────────────────────▼────────────────────────────┐
      │    RECEIVE ULTRASONIC SYNCHRONIZATION SIGNAL AND         │
      │     ULTRASONIC SIGNAL AND MEASURE POSITION OF            │──S1100
      │                 INFORMATION INPUT DEVICE                 │
      └────────────────────────────┬────────────────────────────┘
                                   │
      ┌────────────────────────────▼────────────────────────────┐
      │     INITIALIZE COORDINATE SYSTEM CONVERSION PROCESS      │
      │    WHILE MOVING INFORMATION INPUT DEVICE AND PERFORM     │──S1200
      │               MAPPING OF COORDINATE SYSTEM               │
      └────────────────────────────┬────────────────────────────┘
                                   │
      ┌────────────────────────────▼────────────────────────────┐
      │     GENERATE ULTRASONIC SYNCHRONIZATION SIGNAL AND       │──S1300
      │                  ULTRASONIC SIGNAL                       │
      └────────────────────────────┬────────────────────────────┘
                                   │
      ┌────────────────────────────▼────────────────────────────┐
      │    RECEIVE ULTRASONIC SYNCHRONIZATION SIGNAL AND         │
      │     ULTRASONIC SIGNAL AND MEASURE POSITION OF            │──S1400
      │                 INFORMATION INPUT DEVICE                 │
      └────────────────────────────┬────────────────────────────┘
                                   │
      ┌────────────────────────────▼────────────────────────────┐
      │     CONVERT COORDINATE OF INFORMATION INPUT DEVICE IN    │──S1500
      │  3D REAL SPACE INTO COORDINATE IN STEREOSCOPIC IMAGE SPACE│
      └────────────────────────────┬────────────────────────────┘
                                   │
      ┌────────────────────────────▼────────────────────────────┐
      │        OUTPUT STEREOSCOPIC IMAGE SIGNAL CONTAINING       │──S1600
      │  POINTER INDICATING POSITION OF INFORMATION INPUT DEVICE │
      └────────────────────────────┬────────────────────────────┘
                                   │
                              ┌────▼─────┐
                              │   END    │
                              └──────────┘
```

【Figure 14】

## INTERNATIONAL SEARCH REPORT

International application No.

**PCT/KR2010/004265**

A. CLASSIFICATION OF SUBJECT MATTER

*H04N 13/00(2006.01)i, G06T 15/00(2006.01)i*

According to International Patent Classification (IPC) or to both national classification and IPC

B. FIELDS SEARCHED

Minimum documentation searched (classification system followed by classification symbols)
H04N 13/00; G01S 5/18; G06T 17/40; G06F 3/033

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: "3D, stereoscopy, three dimension, synchronization, image, display, ultrasonic wave, time difference, mouse, remote controller"

C. DOCUMENTS CONSIDERED TO BE RELEVANT

| Category* | Citation of document, with indication, where appropriate, of the relevant passages | Relevant to claim No. |
|---|---|---|
| X | KR 10-0813998 B1 (PENANDFREE CO., LTD.) 14 March 2008<br>See abstract, figures 1-5, and the claims | 1-34 |
| A | US 2008-0278447 A1 (LIN MING-YEN) 13 November 2008<br>See abstract, figures 1-4, and the claims | 1-34 |
| A | JP 10-040424 A (TOSHIBA CORP et al.) 13 February 1998<br>See abstract, figure 1, and the claims | 1-34 |
| A | KR 10-2008-0058219 A (LEE, MOON KEE) 25 June 2008<br>See abstract, figure 1, and the claims | 1-34 |

| ☐ Further documents are listed in the continuation of Box C. | ☒ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 JULY 2011 (18.07.2011) | **18 JULY 2011 (18.07.2011)** |

| Name and mailing address of the ISA/KR<br>Korean Intellectual Property Office<br>Government Complex-Daejeon, 139 Seonsa-ro, Daejeon 302-701, Republic of Korea<br>Facsimile No. 82-42-472-7140 | Authorized officer<br><br>Telephone No. |
|---|---|

Form PCT/ISA/210 (second sheet) (July 2009)

**INTERNATIONAL SEARCH REPORT**
Information on patent family members

International application No.

**PCT/KR2010/004265**

| Patent document cited in search report | Publication date | Patent family member | Publication date |
|---|---|---|---|
| KR 10-0813998 B1 | 14.03.2008 | WO 2008-048036 A1 | 24.04.2008 |
| US 2008-0278447 A1 | 13.11.2008 | JP 2008-282400 A | 20.11.2008 |
| JP 10-040424 A | 13.02.1998 | NONE | |
| KR 10-2008-0058219 A | 25.06.2008 | WO 2008-075900 A1 | 26.06.2008 |

Form PCT/ISA/210 (patent family annex) (July 2009)